# DEMANDE DE BREVET EUROPEEN

(11) **EP 1 225 537 A1**
(43) Date de publication de la demande: **24.07.2002**
(21) Numéro de dépôt: 02370001.6
(22) Date de dépôt: 08.01.2002
(51) Int. Cl.: G06K 9/72, G07C 9/00

(54) **Procédé d'identification d'un individu par lecture d'une carte et moyens pour la mise en oeuvre de ce procédé**

(30) Priorité: 08.01.2001 FR 0100185
(71) Demandeur: Aloatec, Sarl, 62100 Calais (FR)
(72) Inventeur: Bourrier, Philippe, 59240 Dunkerque (FR)
(74) Mandataire: Hénnion, Jean-Claude

(57) **Abrégé**

L'invention se rapporte à un procédé d'identification d'un individu par lecture d'une carte d'identification présentant une pluralité de champs (2A, 2B, 2C, 2D) identifiants.

Il est caractérisé en ce que :
- on lit au moins un champs (2A) identifiant,
- parmi les caractères reconnus, on élimine les caractères les moins bien reconnus de sorte d'obtenir un identifiant tronqué,
- dans une base de données répertoriant pour chaque individu, les champs identifiants, on recherche tous les identifiants dans lesquels figure l'identifiant tronqué pour constituer une liste de sélectionnés,
- sur un deuxième champs (2B) identifiant, on recommence l'opération de reconnaissance des caractères en sorte d'obtenir un deuxième identifiant,
- on recherche tous les identifiants dans lesquels figure le deuxième identifiant pour constituer une deuxième liste de sélectionnés.

## Description

L'invention se rapporte à un procédé d'identification d'un individu par lecture d'une carte d'identification.

Elle se rapporte également aux moyens pour la mise en oeuvre de ce procédé.

Notamment, pour l'accès à certains bâtiment ou zones réservées, l'accès n'est autorisé qu'après avoir identifié le porteur de la carte comme habilité à pénétrer dans le bâtiment.

Pour ce faire, il est nécessaire d'identifier par un moyen approprié l'individu puis de comparer les résultats de la lecture, par exemple, avec une liste d'individus autorisés.

Pour ce faire, il lui est donc remis une carte d'identification qui, outre des mentions du type nom, prénom adresse etc ... présente un code d'identification.

La carte doit être présentée à un lecteur qui va lire le code d'identification pour ensuite interroger une base de donnée.

Si le code lu figure dans la base de donnée, le porteur est alors autorisé à accéder au lieu contrôlé.

La porte est par exemple déverrouillée.

En cas contraire, le déverrouillage n'est pas commandé.

Pour faciliter la lecture et le traitement ensuite de l'information par ordinateur, on utilise principalement deux types de code.

Le premier type de code est le code optique.

Il est connu sous le nom de code barre car, généralement, il s'agit d'une suite de barres noires alternant avec des barres blanches de largeurs variables pour constituer un code numérique pouvant être traité par informatique.

La lecture se fait par un balayage à l'aide d'un faisceau incident qui est renvoyé sur un lecteur.

Au lieu de ces codes optiques, on utilise les codes électroniques.

Ils sont inscrits sur une piste magnétique ou au coeur d'une mémoire électronique interrogeable.

L'identification par lecture d'un code optique ou électronique nécessite bien évidemment la fabrication puis la remise d'une carte ou autre support générant le code approprié.

Le coût de fabrication de ces cartes est non négligeable.

Pour cette raison, ce type de moyen d'identification n'est utilisé que pour une population réduite, par exemple, pour les salariés d'une entreprise.

Elles sont par contre largement utilisées dans le domaine bancaire mais le coût en est supporté soit par le titulaire, soit par la banque.

D'autres moyens sont également utilisés pour le contrôle d'accès et consistent, par exemple, à la lecture de l'empreinte digitale ou celle de la rétine mais ils sont plus rares car ils nécessitent des investissement plus coûteux et dont la destination est plus spécifique.

Ces dernières techniques sont indiquées uniquement à titre informatif.

Pour beaucoup d'autres lieux, le contrôle se fait en présentant à un préposé une carte d'identification.

La carte est généralement délivrée par l'organisme chargé de la gestion des accès et comporte une présentation spécifique.

La carte d'identité nationale ou encore le passeport est également un moyen d'identification qui ne nécessite pas d'investissement pour celui qui l'utilise comme moyen d'identification.

Il en est ainsi des déchetteries qui ne sont, généralement, accessibles qu'aux habitants d'une commune ou d'un groupement de communes.

Lorsque l'individu se présente, le préposé à la déchetterie vérifie à l'aide de la carte d'identité du porteur que celui-ci réside dans la zone intéressée par la déchetterie et autorise alors le porteur de la carte à vider son chargement.

Cela nécessite donc la présence d'un préposé chargé de ce contrôle.

Eventuellement, la vérification nécessite que le préposé entre, manuellement, dans un ordinateur les références de l'individu pour obtenir une réponse.

Ce système est largement utilisé.

Pour remplacer le préposé, on peut envisager de remplacer la lecture du préposé par une lecture optique avec une reconnaissance de caractères mais il se pose cependant beaucoup de difficultés.

En effet, dès que la carte commence à s'abîmer, le nombre d'erreurs de lecture augmente.

Pour minimiser une erreur de reconnaissance de caractère après lecture, il est connu de refaire cette reconnaissance avec un autre logiciel de reconnaissance de caractère, toutefois, le système a ses limites et le préposé est alors obligé d'introduire les données qu'il lit lui-même ou alors, l'accès est refusé.

Ce type de procédé reste donc peu efficace.

L'invention se propose notamment de remédier a cet inconvénient.

A cet effet, l'invention a pour objet un procédé d'identification par lecture optique et reconnaissance de caractère d'une pièce d'identité d'un individu présentant une pluralité de champs identifiant, ce procédé étant caractérisé en ce que :
- on lit au moins un champs identifiant,
- sur un premier champs identifiant, on reconnaît les caractères de ce champs,
- parmi les caractères, on élimine les caractères les moins bien reconnus de sorte d'obtenir un identifiant tronqué,
- dans une base de données répertoriant pour chaque individu, les champs identifiants, on recherche tous les identifiants dans lesquels figure l'identifiant tronqué pour constituer une liste de sélectionnés,
- sur un deuxième champs identifiant, on recommence l'opération de reconnaissance des caractères et au moins parmi la liste de sélectionnés, on recherche tous les identifiants dans lesquels figure le deuxième identifiant pour constituer une deuxième liste de sélectionnés et
- si la deuxième liste contient un seul identifiant ou aucun identifiant, on arrête le processus de sélection,
- si la deuxième liste contient plus d'un identifiant, on recommence les opérations précédentes au moyen d'une analyse sur un troisième champs jusqu'à obtenir une liste vide ou contenant un seul sélectionné.

L'invention a également pour objet les moyens pour la mise en oeuvre du procédé.

L'invention sera bien comprise à l'aide de la description ci-après faites à titre d'exemple non limitatif en regard des dessins ci-annexés qui représente schématiquement :

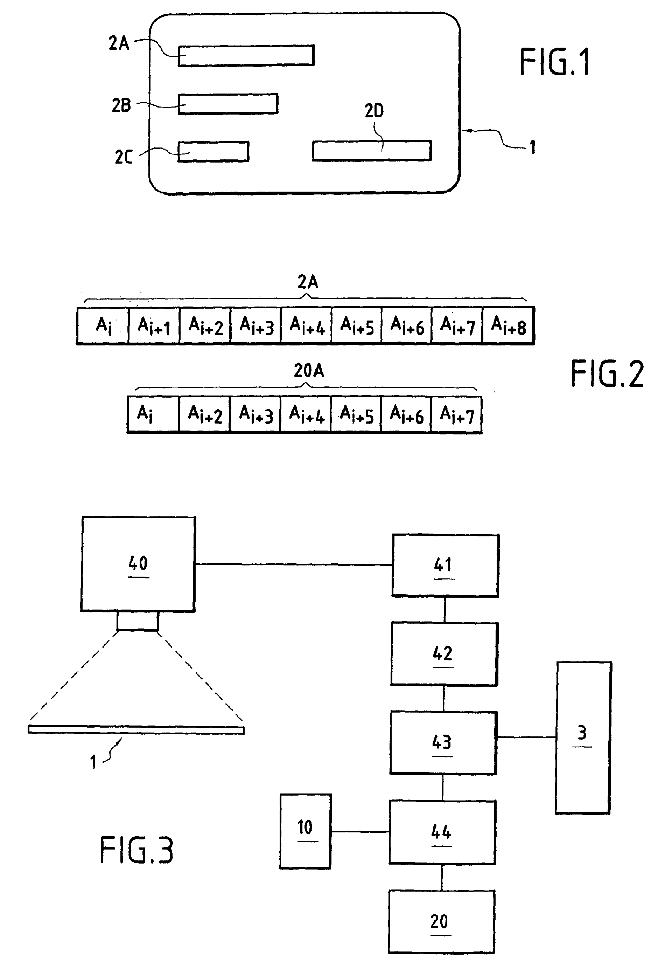

- figure 1 : une carte d'identification,
- figure 2 : un détail de deux champs,
- figure 3 : une installation.

En se reportant au dessin, on voit une carte 1 d'identification d'un individu telle sa carte d'identité.

Cette carte présente une pluralité de champs 2A, 2B, 2C, 2D identifiants.

On y retrouve, par exemple, les coordonnées de l'individu porteur de la carte telles son nom, son prénom, la rue, la ville etc.... et généralement, un numéro d'identification.

Pour accéder à une zone réservée, il est nécessaire de vérifier que l'accès est autorisé.

Pour cette autorisation, il est mis en place un procédé d'identification d'un individu par lecture d'une carte d'identification présentant une pluralité de champs 2A, 2B, 2C, 2D identifiant.

On commence à détecter la présence de la carte et, éventuellement, son inclinaison et/ou son orientation.

On demande éventuellement à l'opérateur de repositionner la carte.

Une deuxième opération consiste à détecter le type de carte, par exemple, par examen de pictogramme et/ou de zone caractéristique du type position de certaines zones d'écritures ou encore de traits, etc ....

Selon une caractéristique de l'invention, ce procédé est caractérisé en ce que :
- on lit au moins un champs 2A identifiant,
- sur un premier champs identifiant, on reconnaît les caractères Ai de ce champs,
- parmi les caractères Ai, on élimine les caractères les moins bien reconnus de sorte d'obtenir un identifiant 20A tronqué,
- dans une base 3 de données répertoriant pour chaque individu, les champs identifiants, on recherche tous les identifiants dans lesquels figure l'identifiant tronqué 20A pour constituer une liste 10 de sélectionnés,
- sur un deuxième champs 2B identifiant, on recommence l'opération de reconnaissance des caractères en sorte d'obtenir un deuxième identifiant 20B,
- on recherche tous les identifiants dans lesquels figure le deuxième identifiant 20B pour constituer une deuxième liste de sélectionnés et
- si la deuxième liste contient un seul identifiant ou aucun identifiant, on arrête le processus de sélection,
- si la deuxième liste contient plus d'un identifiant, on recommence les opérations précédentes au moyen d'une analyse sur un troisième champs 2C jusqu'à obtenir une liste vide ou contenant un seul sélectionné.

De préférence, s'il existe sur la carte d'identification un identifiant sous forme numérique, on lit en premier cet identifiant

Dans une variante de réalisation, lors de la lecture du deuxième champs et éventuellement des suivants, on élimine également les caractères les moins bien lus en sorte d'obtenir un identifiant tronqué et c'est avec ce deuxième identifiant tronqué que l'on sélectionne la deuxième liste et ainsi de suite.

Pour obtenir, cette deuxième liste, deux méthodes sont possibles.

La première méthode est présentée ci- après.

Parmi toutes les informations de la base de données, on dresse une liste provisoire de sélectionnés que l'on compare à la première liste de sélectionnés pour en extraire la deuxième liste.

La deuxième méthode consiste à rechercher directement dans la première liste de sélectionnés si on retrouve le deuxième identifiant.

Cette deuxième méthode est en principe plus rapide.

On peut, soit adapter le nombre de caractères supprimés en fonction de critères, soit systématiquement supprimer un nombre de caractères moins bien lus.

Bien évidemment, préalablement, à cette analyse, les différents identifiants ont été introduits dans une banque de donnée.

Avantageusement, pour introduire ces identifiants, dans une base de données :
- on lit les champs identifiants avec un dispositif électronique et on procède à une reconnaissance de caractères sur l'ensemble des champs identifiants,
- on affiche les informations fournies par cette reconnaissance de caractères et
- on propose de corriger chacun des champs avant de valider et de stocker l'information.

Avantageusement, on contrôle la validité de la carte et, à cet effet, on examine optiquement certaines zones de la carte présentant un ou plusieurs critères de validité invisible à l'oeil nu.

L'utilisation de ces cartes oblige parfois à centrer préalablement la position des cartes et/ou le type.

A cet effet, le procédé commencera par détecter les bords des cartes pour en déterminer le format. Parfois, lorsque ces cartes sont abîmées, le procédé ne fonctionne pas.

On utilise alors un autre algorythme pour détecter la topologie des zones d'inscription à l'intérieur de ces cartes. Cet algorythme fonctionne à l'aide d'un procédé de traitement d'image de squelettisation horizontal qui permet de déterminer les zones d'écriture de caractères d'une certaine hauteur et largeur.

Lors de cette étape, on détermine le nombre de caractères différents, leurs positions sur la carte et leurs dimensions. Cette première étape est réalisée par comparaison avec des coordonnées et caractéristiques des caractères prédéfinies pour chaque type de carte.

Dans le cas où quelques caractères seraient absents du fait d'une usure de la carte, par exemple, alors on ne prend que les caractères présents pour le traitement de reconnaissance des caractères. Ceci conduit directement à un ou plusieurs champs tronqués 20A.

Pour certaines cartes, il existe des redondances qui permettent de vérifier directement si la lecture a une probabilité importante d'être juste au premier passage. Il peut s'agir par exemple d'une opération mathématique effectuée sur une série de chiffres dont le résultat est égal à certains caractères inscrits sur la carte. Il peut s'agir aussi d'une redondance entre le code postal de la ville et un code numérique présent dans le numéro de la carte ou entre une date de naissance et une série de chiffres présents à un autre emplacement.

A la fin de cette étape, le système apprécie la probabilité de bonne lecture au premier passage. Si la lecture a une forte probabilité d'être juste, alors le procédé itératif suivant sera limité su un ou deux caractères, les moins bien lus. En revanche, si la probabilité de bonne lecture au premier passage est très faible ou nulle, alors on augmente le nombre de caractères les moins bien lus et le nombre d'itération pour converger vers la lecture la plus probable.

Cet examen peut être fait à l'aide d'un grossissement et/ou d'un ou plusieurs éclairages spéciaux.

Le procédé met en oeuvre les étapes suivantes :
- on binarise l'image sur un ou plusieurs plans de niveaux de gris ou de couleur,
- on analyse les pixels voisins dans une fenêtre prédéterminée, par exemple, de dimension 3 x 2 où le pixel d'intérêt est au centre inférieur de la fenêtre,
- on affecte à chaque pixel d'intérêt un code en fonction du nombre et de la position de ses plus proches voisins,
- ce « surcodage » affectant un code à chaque pixel en fonction de la topologie de ses plus proches voisins est reconduit ligne par ligne au fur et à mesure de l'acquisition des pixels depuis le capteur CCD,
- par traitement de la matrice de surcodage, on détermine le contour de formes quelconques : lignes, formes géométriques ou non géométriques, pleines ou non.

Le procédé permet en un temps de calcul très bref de calculer l'inclinaison de la carte et de proposer par exemple à l'opérateur de corriger sa position.

Mis en oeuvre dans les étapes ultérieures, le procédé permet de positionner les zones d'écriture dont les caractères ont, par exemple, une certaine hauteur, de positionner les photographies, le pictogramme et autres dessins. Ces éléments permettent par comparaison avec une base de données d'apprentissage d'identifier rapidement le type de carte et donc les zones d'intérêt de lecture.

On utilise enfin les résultats du procédé localement pour compter et positionner chacun des caractères d'une zone d'écriture.

Le procédé permet aussi d'identifier rapidement la présence d'un tampon ou d'une signature dans la carte d'identité dont la position n'est pas toujours connue et qui pourrait perturber la qualité de lecture de certains caractères ....

Les moyens pour la mise en oeuvre comprennent :
- un moyen 40 de lecture des champs que présentent la carte,
- un moyen 41 de reconnaissance de caractères,
- un moyen 42 d'analyse de la qualité visuelle des caractères pour éliminer les caractères les moins bien reconnus,
- un moyen 43 de comparaison de ou des identifiants reconnus avec une liste d'identifiants, et
- un moyen 44 d'extraction d'une liste 10, 20, ...de sélectionnés.

Le dispositif comprendra un support pour le positionnement de la carte d'identification et un éclairage approprié.

Ainsi, lorsque la carte est positionnée correctement, on numérise une image de cette carte.

De cette image numérique, on isole les champs comportant des caractères alphanumériques.

Puis on isole chacun des caractères pour en faire une reconnaissance de caractère avec un facteur qualificatif.

Pour cela, on utilise par exemple une caméra du type « CCD », une carte de numérisation, un logiciel de sélection de certaines zones de la carte présentant des caractères alphanumériques.

Ensuite, on traite les informations comme cela est indiqué plus haut.

Un tel système est très avantageux économiquement car il permet d'utiliser les cartes d'identités existantes.

## Revendications

1. Procédé d'identification d'un individu par lecture d'une carte d'identification présentant une pluralité de champs (2A, 2B, 2C, 2D) identifiants **CARACTERISE en ce que** :
- on lit au moins un champs (2A) identifiant,
- sur un premier champs identifiant, on reconnaît les caractères (Ai) de ce champs,
- parmi les caractères (Ai), on élimine les caractères les moins bien reconnus de sorte d'obtenir un identifiant (20A) tronqué,
- dans une base (3) de données répertoriant pour chaque individu, les champs identifiants, on recherche tous les identifiants dans lesquels figure l'identifiant tronqué (20A) pour constituer une liste (10) de sélectionnés,
- sur un deuxième champs (2B) identifiant, on recommence l'opération de reconnaissance des caractères en sorte d'obtenir un deuxième identifiant (20B),
- on recherche tous les identifiants dans lesquels figure le deuxième identifiant (20B) pour constituer une deuxième liste de sélectionnés et
- si la deuxième liste contient un seul identifiant ou aucun identifiant, on arrête le processus de sélection,
- si la deuxième liste contient plus d'un identifiant, on recommence les opérations précédentes au moyen d'une analyse sur un troisième champs (2C) jusqu'à obtenir une liste vide ou contenant un seul sélectionné.

2. Procédé d'identification selon la revendication 1 **caractérisé en ce que**, s'il existe sur la carte d'identification un identifiant sous forme numérique, on lit en premier cet identifiant

3. Procédé d'identification selon la revendication 1 **caractérisé en ce que**, lors de la lecture du deuxième champs et éventuellement des suivants, on élimine également les caractères les moins bien lus en sorte d'obtenir un identifiant tronqué et c'est avec ce deuxième identifiant tronqué que l'on sélectionne la deuxième liste et ainsi de suite.

4. Procédé d'identification selon la revendication 3 **caractérisé en ce qu'**on dresse une liste provisoire de sélectionnés que l'on compare à la première liste de sélectionnés pour en extraire la deuxième liste.

5. Procédé d'identification selon la revendication 3 **caractérisé en ce qu'**on recherche directement dans la première liste de sélectionnés si on retrouve le deuxième identifiant.

6. Procédé d'identification selon la revendication 1 **caractérisé en ce qu'**on contrôle la validité de la carte et, à cet effet, on examine optiquement certaines zones de la carte présentant un critère de validité invisible à l'oeil nu.

7. Procédé d'identification selon la revendication 1 **caractérisé en ce que**, pour introduire ces identifiants, dans une base de données :
- on lit les champs identifiants avec un dispositif électronique et on procède à une reconnaissance de caractères sur l'ensemble des champs identifiants,
- on affiche les informations fournies par cette reconnaissance de caractères et
- on propose de corriger chacun des champs avant de valider et de stocker l'information.

8. Procédé d'identification selon la revendication 1 **caractérisé en ce que** :
- on binarise l'image sur un ou plusieurs plans de niveaux de gris ou de couleur,
- on analyse les pixels voisins dans une fenêtre prédéterminée,
- on affecte à chaque pixel d'intérêt un code en fonction du nombre et de la position de ses plus proches voisins,
- ce « surcodage » affectant un code à chaque pixel en fonction de la topologie de ses plus proches voisins est reconduit ligne par ligne au fur et à mesure de l'acquisition des pixels depuis le capteur,
- par traitement de la matrice de surcodage, on détermine le contour de formes quelconques : lignes, formes géométriques ou non géométriques, pleines ou non.

9. Moyens pour la mise en oeuvre du procédé selon l'une quelconque des revendications 1 à 8 **caractérisés en ce qu'**ils comprennent :
- un moyen (40) de lecture des champs que présentent la carte,
- un moyen (41) de reconnaissance de caractères,
- un moyen (42) d'analyse de la qualité visuelle des caractères pour éliminer les caractères les moins bien reconnus,
- un moyen (43) de comparaison de ou des identifiants reconnus avec une liste d'identifiants, et
- un moyen (44) d'extraction d'une liste de sélectionnés.
